# EUROPEAN PATENT SPECIFICATION

(11) **EP 0 536 423 B1**
(45) Date of publication and mention of the grant of the patent: **03.09.1997**
(21) Application number: 92909549.5
(22) Date of filing: 24.04.1992
(51) Int. Cl.: H01B 7/34, H01B 3/30, H01B 3/44, C08K 3/22, C08L 23/04

(54) **HEAT-PROOF LEAD WIRE FOR HIGH DC VOLTAGE**
WÄRMEBESTÄNDIGER LEITFÄHIGER DRAHT FÜR HOHE GLEICHSPANNUNG
FIL CONDUCTEUR RESISTANT A LA CHALEUR POUR HAUTE TENSION CONTINUE

(30) Priority: 26.04.1991 JP 125376/91
(43) Date of publication of application: 14.04.1993
(73) Proprietor: SUMITOMO ELECTRIC INDUSTRIES, LTD., Osaka-shi, Osaka 541 (JP)
(72) Inventor: HAYAMI, Hiroshi, Osaka Works of Sumitomo, Konohana-ku, Osaka-shi, Osaka 554 (JP)
(74) Representative: Bankes, Stephen Charles Digby
(86) International application number: JP9200535
(87) International publication number: WO9220075

(56) References cited:
- EP-A- 0 004 017
- EP-A- 0 164 201
- EP-A- 0 370 517
- EP-A- 0 474 252
- DE-A- 3 633 056
- JP-A-53 110 086
- JP-A-87 330 614
- JP-A-91 276 771
- US-A- 4 327 001
- EP-A- 0 004 017
- EP-A- 0 164 201
- EP-A- 0 370 517
- EP-A- 0 474 252
- DE-A- 3 633 056
- JP-A-53 110 086
- US-A- 4 327 001

## Description

The present invention relates to heat-resistant, high-voltage lead wires for direct current, which have performances meeting the UL Standards at temperature ratings higher than 125°C and are to be utilized, for example, for wiring in televisions, electromagnetic cookers, copying machines, computers and other electronic appliances.

It is important for the insulated wires used in televisions, electromagnetic cookers, copying machines, computers and other electronic appliances to be safe against fire, and such fire-resistant, insulated wires as authorized by the Electric Appliances Regulations in Japan, the UL Standards in the United States and the CSA Standards in Canada are used for the purpose.

In addition, since the fire-resistant, insulated wires used in the high-voltage parts of electronic appliances deal direct current of so high a voltage of 10 to 40 kV, safety against high voltage is also important.

As the method of evaluation of high-voltage wires for electronic appliances, one described in the Subject 758 in the UL Standards are known. In the evaluating method described there, (1) the high-voltage cut-through test and (2) the fire-resistance test are regarded to be technically difficult to pass.

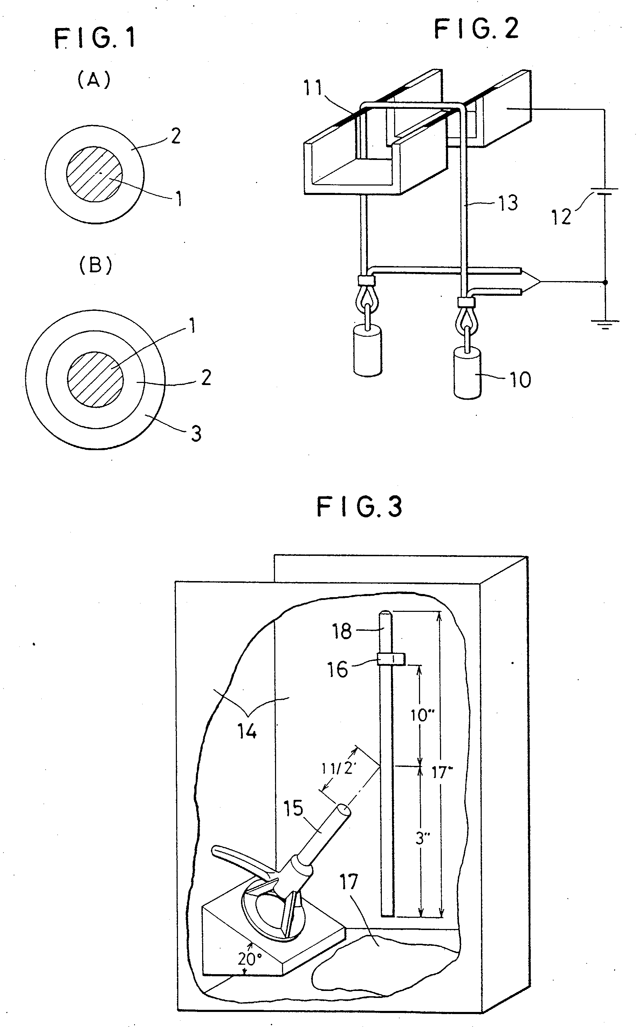

Fig. 2 is given for explaining the high-voltage cut-through test according to the Subject 758 in the UL Standards. As shown in the figure, to both ends of a wire 13 which is hung down over two parallel drill rods 11, 0.8mm (1/32") in diameter, are applied loads 10 of 4549 (1 pound), in a bath kept at the temperature rating, and when 1.5 times as high a rated voltage is applied from the source of direct current 12, breakdown must not take place within 7 hours.

Fig. 3 is provided for the explanation of the fire-resistance test according to the UL Standards. As shown in the figure, when a wire 18, placed perpendicular in an enclosure 14 for the protection from the movement of surrounding air, is exposed to fire from a burner 15, the fire must be extinguished within 60 seconds, and absorbent cotton 17 placed on the bottom must not take fire from dropped burning matter and moreover a sheet of kraft paper 16 placed above must not take fire into flame nor be scorched.

In order to satisfy these two requirements, double layered wire comprising inner polyethylene insulation and outer flame retarding resin composition jacket have been employed.

For instance, a wire in which polyethylene with melting point higher than 105 °C is coated over the conductor for passing the high-voltage cut through test, and the flame retarding jacket comprising mainly ethylene-vinylacetate-vinylchloride copolymer is coated surrounding the polyethylene insulation is reported. (See Japanese Patent Publication No. 41786/1977)

It is also reported that the similar double layered wire outer layer of which is comprising polyvinylchloride grafted chlorinated polyethylene (Japanese Patent Publication No. 15058/1979), chlorosulfonated polyethylene. (Japanese Patent Laid-Open Publication No. 42755/1974)

These insulated wires achieve VW-1 level flame retardancy by means of covering polyethlene with a highly fire resisting resin composition, which can compensate easy flamability of polyethylene while keeping the excellent insulation property and tracking resistance of polyethylene.

However, these insulated wires have upper limit of temperature rating of 105°C , because the outer resin composition layer have PVC moiety or chlorine-containing monomers as a repeating unit.

There are also some examples of single layered high-voltage lead wires in prior art, the insulation of these wires are flame retardant resin like a chlorinated polyethylene. However, these insulated wires also have an upper limit of temperature rating of 105°C , so these high-voltage wires cannot be used at higher temperatures.

A method to make a flame retardant polyethylene composition by adding a flame retardant is also known. However, the voltage resistance of these flame retardant polyethylene compositions is inferior, so high-voltage lead wires with excellent properties have not been obtained by using such a flame retardant polyethylene composition as an insulation.

On the other hand, requirements for the use of high-voltage lead wires have become increasingly severe. Electronic appliances have become smaller and smaller and many functions have been required which result in an increased amount of wiring and increased requirements for safety and heat resistance in wiring materials. To meet such requirements the employment of some highly heat-resistant resins other than polyolefins has been considered.

Generally, as high-voltage lead wires used in an environment at higher than 150°C, wires with vulcanised silicone rubber have been employed.

Silicone rubber-insulated high-voltage lead wires have excellent flexibility and electrical properties, but the silicone rubber insulation is apt to tear by scraping against a metal edge during the wiring operation. This sometimes causes cracks of the insulation and leads tc a dielectric break-down in the worst case.

Some techniques, for example, covering the silicone rubber insulated wires with braided glass tubing or resin tubing are known, However, in general silicone rubber insulated wires are expensive, and the total cost becomes much higher when such protective tubings are adopted. And in addition, the diameter of the protected wire becomes so large that handling becomes difficult in the wiring operation.

High voltage wires for direct current utilizing such fluorocarbon resins as tetrafluoroethylene and tetrafluoroethylene-hexafluoroethylene copolymer as the insulating materials are also known. They are excellent wires with heat resistance at higher than 150°C, but they are more expensive than silicone-rubber insulated wires and accordingly they are not practical for use other than for specific purpose.

EP-A-474252, dated 7th September 1991, claiming priorities of 7th September 1990 and 19th April 1991 and published 11th March 1992, discloses a flame-retardant resin composition obtained by irradiating with ionizing radiation a resin composition comprising 100 parts by weight of a thermoplastic resin, from 100 to 250 parts by weight of magnesium hydroxide, and from 1 to 10 parts by weight of an organosilicon compound represented by formula: 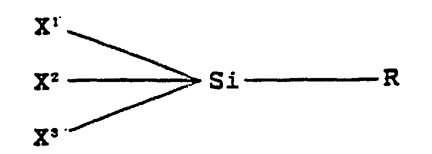 wherein R represents an alkyl group containing a methacrylic or acrylic group and X¹, X² and X³ each represents an alkyl group, an alkoxyl group or a halogen group; and an insulated electrical wire obtained by coating the above flame-retardant resin composition on a conductor followed by irradiation.

The present invention consists in a heat resistant, high voltage lead wire for direct current, comprising a conductor and an insulating layer of a polyolefin-based resin composition, irradiated by ionising radiation, surrounding the conductor, wherein the resin composition contains 5 to 50 weight parts of a halogen-containing flame retardant per 100 weight parts of the resin and is made by adding more than 1 part by weight and less that 10 parts by weight of an organo-silane compound which is represented by the general formula I described above, during the mixing of more than 100 parts by weight and less than 200 parts by weight of a metal hydroxide to 100 parts by weight of a polyolefin resin.

There can thus be provided a heat-resistant high-voltage lead wire for direct current with a temperature rating of 125°C, which satisfies the perpendicular flame resistance (VW-1) test according to the UL standard and which can be manufactured efficiently using inexpensive materials.

Such lead wires have considerable utility in meeting the requirements of higher heat resistant properties in the field of high-voltage wires for direct current.

Preferred embodiments of the invention will now be described with reference to the accompanying drawings wherein:
Figs. 1 (A) and (B) are cross sectional diagrams of embodiments of the high-voltage lead wire for direct current according to the present invention;
Fig. 2 is a diagram for explaining the high-voltage cut-through test; and
Fig. 3 is a diagram for explaining the VW-1 combustion test.

The temperature rating of 125 °C here referred to means that the products pass the above-stated high-voltage cut-through test in the UL Standards at the test temperature of 125°C and also satisfy the following heat aging tests.

In case of the polyethylene insulated wire with temperature rating of 125 °C , it is required that the retention of tensile strength is more than 70% and retention of elongation is more than 65% after heat aging test for 7 days at 158°C and for 60 days at 136 °C .

In case of temperature rating of 150°C , it is required that the retention of tensile strength is more than 70% and retention of elongation is more than 65% after heat aging test for 7 days at 180 °C and for 60 days at 158°C .

And the high-voltage lead wire for direct current can be manufactured by extruding the said flame retarded polyolefin resin composition over the conductor followed by irradiation of ionizing radiation.

Figs. 1 (A) and (B) are cross-sectional views of the high-voltage wires for direct current according to the present invention and 1 stands for the conductor while 2 and 3 for the coating films of the above stated resin composition; 2 and 3 may be of a same composition or of different ones within the range of the above stated compositions.

Needless to mention, antioxidants, lubricants, coloring pigments, fillers and other additives may be added to the above resin compositions if desired.

As polyolefin resins may be mentioned, in addition to polyethylene, such ethylene-α-olefin copolymers as ethylene-vinylacetate copolymer, ethylene-methyl acrylate copolymer, ethylene-ethylacrylate copolymer, ethylene-methylmethacrylate copolymer, ethylene-1-butene copolymer, ethylene-1-hexene copolymer and ethylene-propylene rubber, and among them ethylene-vinyl acetate copolymer, ethylene-methylacrylate copolymer and ethylene-ethylacrylate copolymer are particularly preferable from the view point of their flexibility and extrusion performance.

As the halogen-containing flame retardants may be mentioned as examples such a chlorine-containing retardant as perchloropentacyclodecane, such bromine-containing retardants as brominated diphenylether derivative, brominated bisphenol derivative, brominated epoxy resin derivative and brominated phthalimide, and such a phosphorus-containing retardant as brominated phosphate, and it is also possible to augment the flame retarding performance by using in combination of auxiliary flame retardants such as antimony trioxide, zinc borate and molybdenum oxide.

The halogen-containing flame retardants are used in the range of 5 to 50 parts by weight in view of the perpendicular flame resistant property (VW-1) of the high-voltage wire for direct current with thicker than 1.0 mm of insulating layer, and when they are used in less than 5 parts by weight flame retarding performance is unsatisfactory while when they are used in more than 50 parts by weight heat aging resistance will deteriorate.

Examples of the metal hydroxides are aluminum hydroxide, magnesium hydroxide and calcium hydroxide, and of them magnesium hydroxide with the particle size in the range of 0.1 to 3 µm is preferable in view of its extrusion processibility, and the particles with no surface treatment with fatty acid salts, silane coupling agents or other agents are preferable in view of their high-voltage cut-through performance and initial tensile strength.

The preferable amount of metal hydroxide to be added is in the range of 100 to 200 parts by weight in view of the high-voltage cut-through performance, and when it is less than 100 parts by weight the high-voltage cut-through performance is unsatisfactory while when it is more than 200 parts by weight extrusion operation will be undesirably affected.

As the organic silane compounds as shown by the above general formula may be mentioned, for examples, γ -methacryloxypropyltrimethoxysilane, γ -acryloxypropyltrimethoxysilane, γ -methacryloxypropyldimethoxymethylsilane, and γ -methacryloxyethyltrimethoxysilane are preferably to be used, and the organic silane compound is to be added when mixing the molten polyolefin resin, metal hydroxide and halogen-containing flame retardant with compounding machine.

The preferable amount of the organic silane compound to be added is in the range of 1 to 10 parts by weight in view of the balance between the high-voltage cut-through property and initial tensile strength at break where the amount of metal hydroxide is in range of 100 to 200 parts by weight.

When the added amount of organic silane compounds is less than 1 part by weight, the high-voltage cut-through property is insufficient and the initial tensile strength at break is lower than the level of 1.06kg/mm² which is required for polyolefin insulated wires in UL Standards, while addition of the organic silane compounds more than 10 parts by weight leads to undesirable effect in the flame retardancy.

Into the above resin compositions may be added, if desired, such inorganic fillers as talc, clay, calcium carbonate, magnesium carbonate and zinc oxide antimony trioxide, zinc borate, antioxidant, coloring pigment, such a multi-functionalized monomers which accelerates cross-linking as trimethylolpropane trimethacrylate, and other additives, and mixing these ingredients may be done by using such well-known mixing apparatus as banbury mixer, pressure kneader, open-roll mixer and mono- and biaxial mixers.

Coating the conductor with these resin compositions may be performed by using known melt extruder, and the insulation may be formed over the conductor in single layer or in multiple layers of a same material.

Cross-linking with irradiation of ionizing radiations may be conducted by using α-rays, electron beam (β-rays), γ-rays, X-rays, ultraviolet rays and others from the sources of ionizing radiations, but in view of such industrial profitabilities as transmitting distance, irradiation dose and time required by irradiation, electron beam is desirable as the source of radiation.

### EXAMPLES

Sample wires were prepared as follows: The resin compositions shown in Tables 1 to 3 were kneaded together with polyolefin resin, fillers, organic silane compound, anti-oxidant and other additives which were added at a same time by using an open-roll mixer heated at 130°C and the mixture was made into pellets. The pellets were used to be extruded over annealed copper wire, 0.8 mm in diameter by using a melt extruder to obtain insulated wires with diameters of 2.27 mm and 4.23 mm, which were irradiated by electron beam at 2 MV of acceleration voltage to prepare the sample wires.

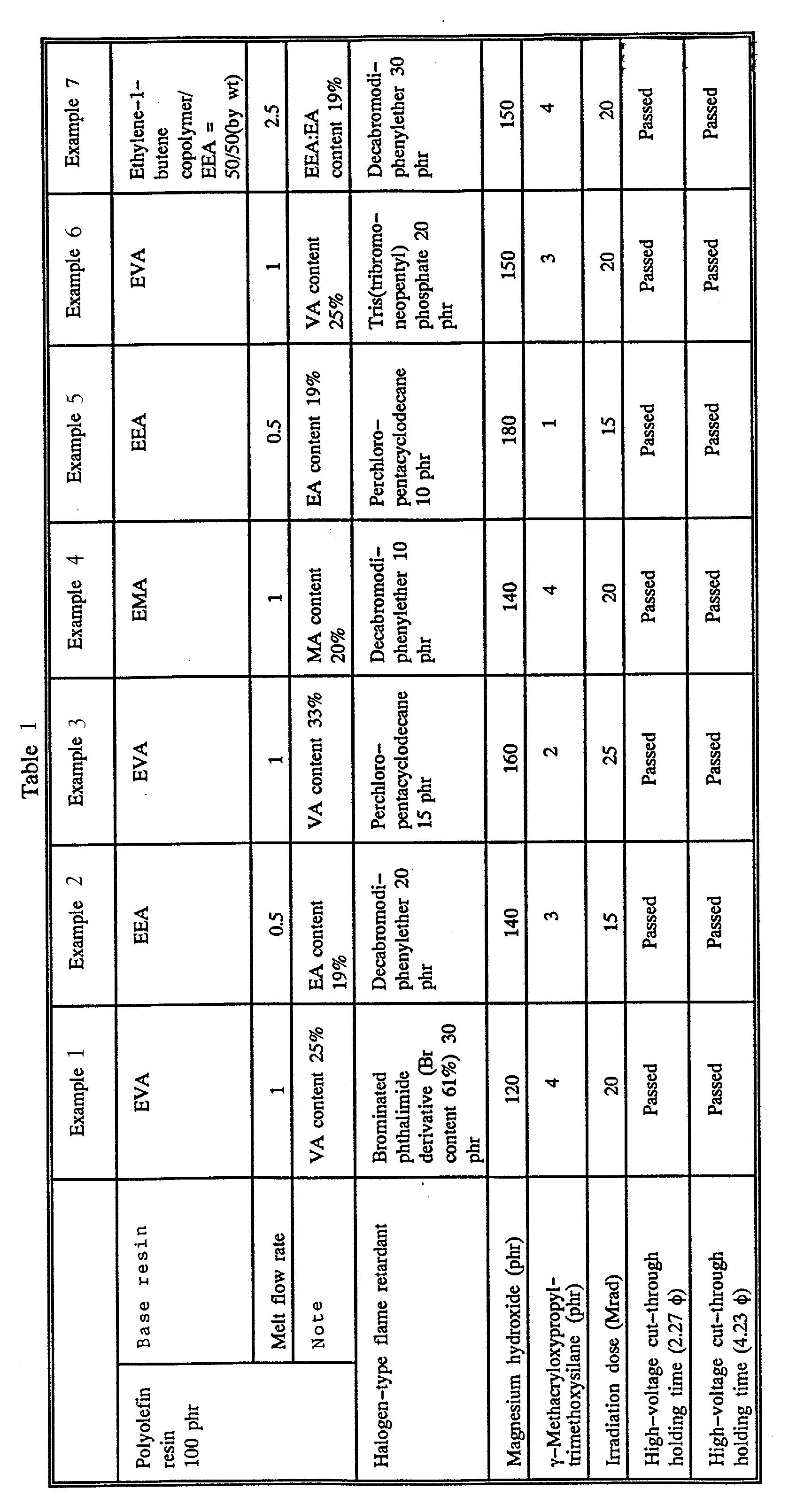

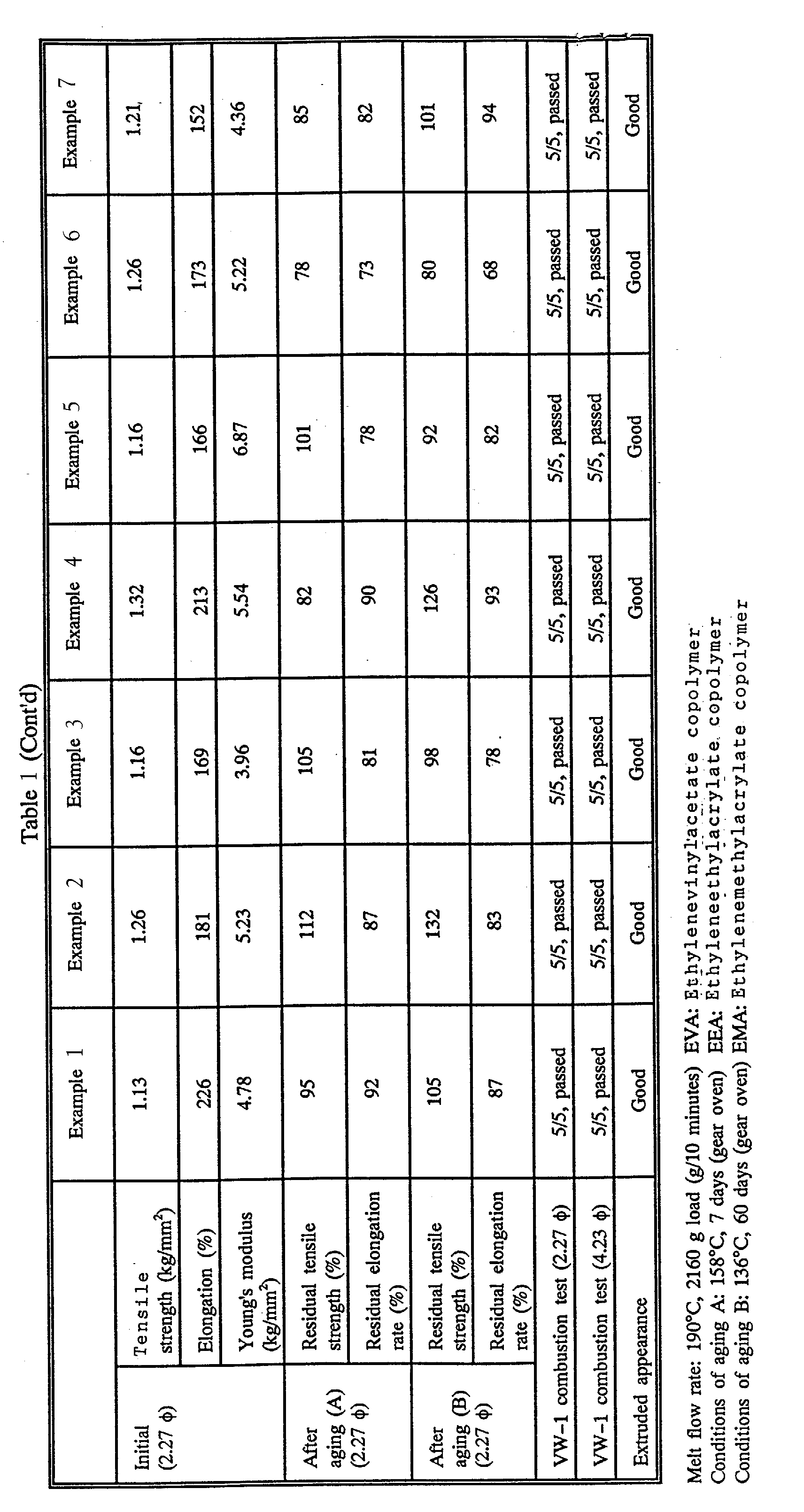

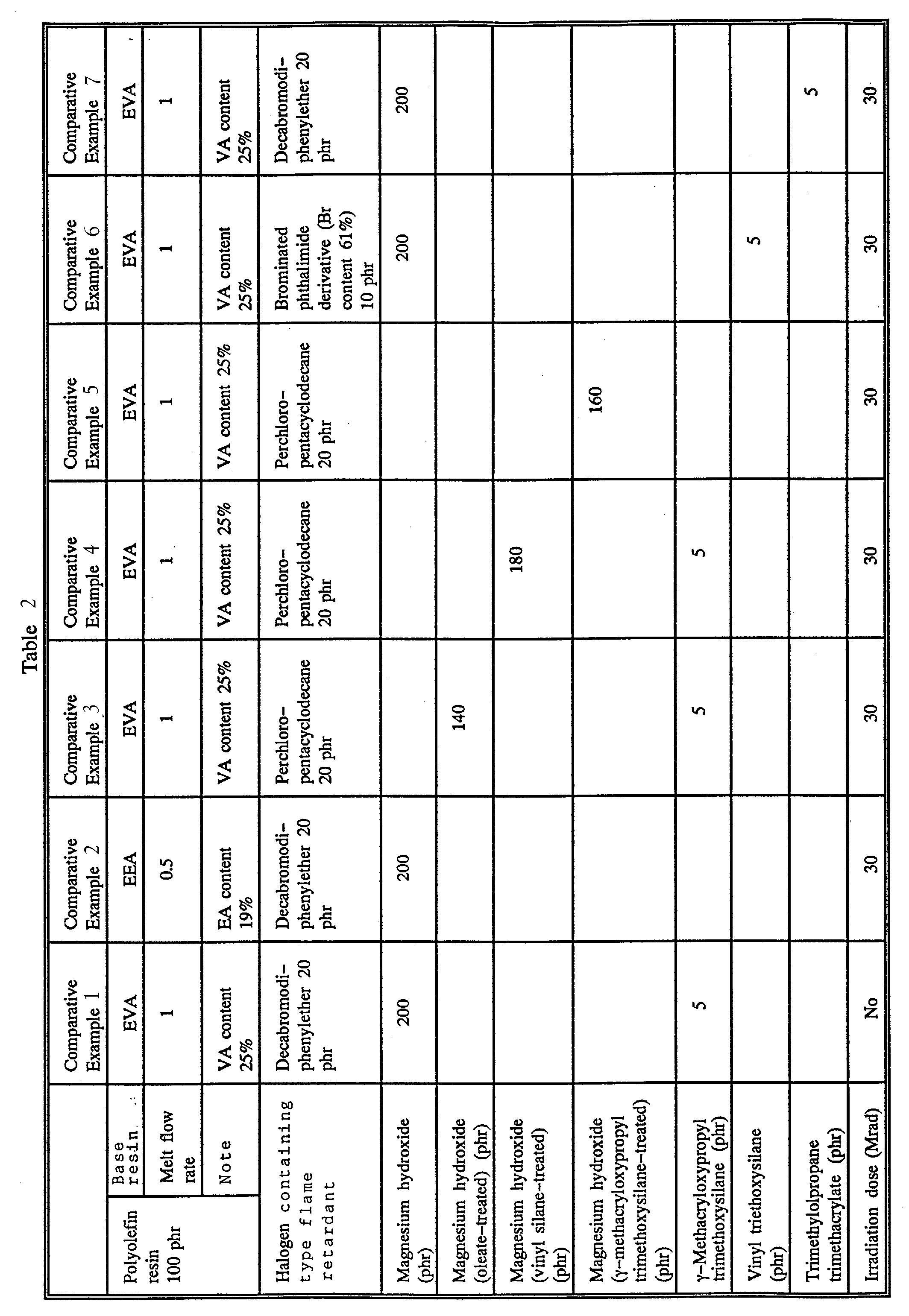

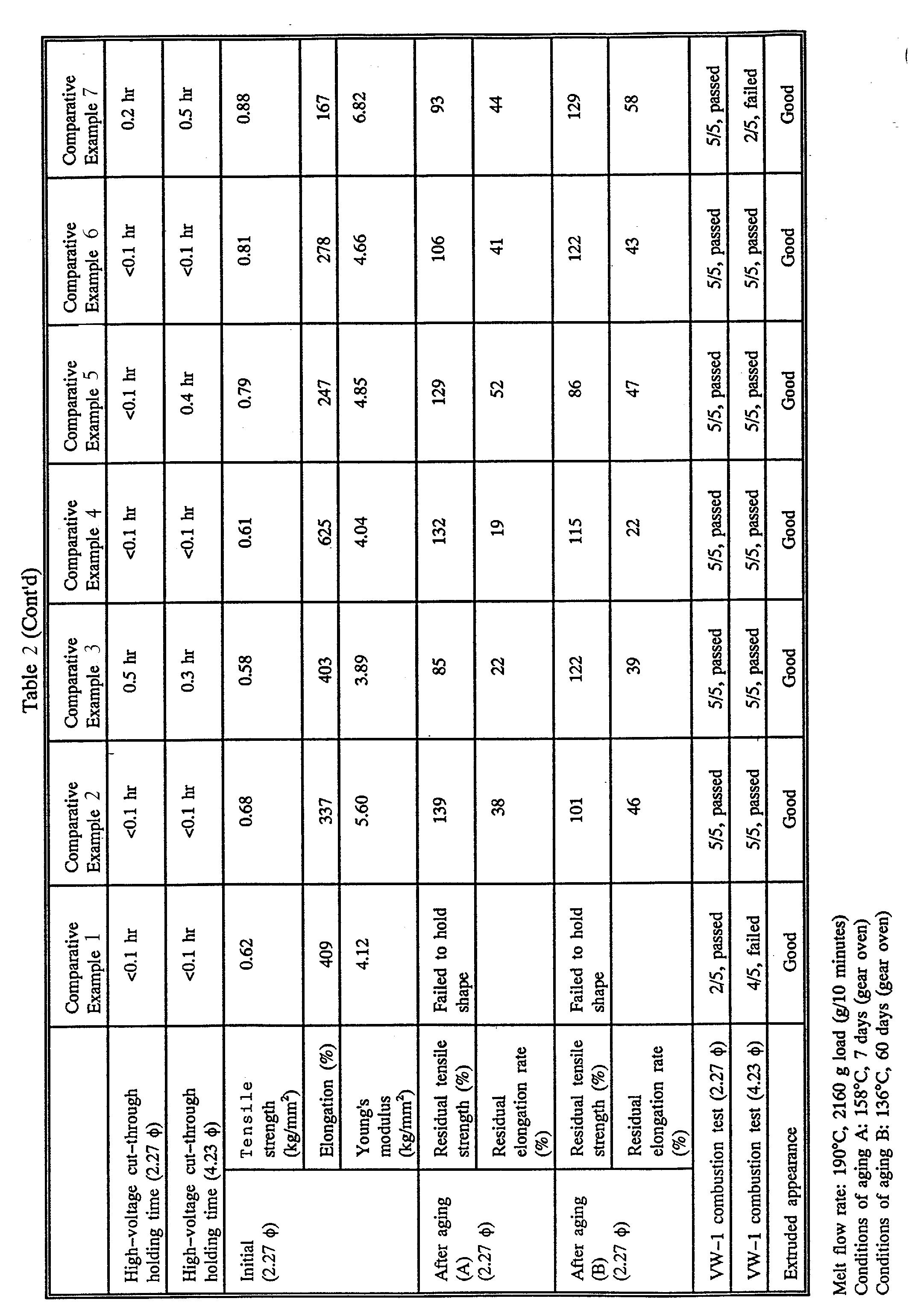

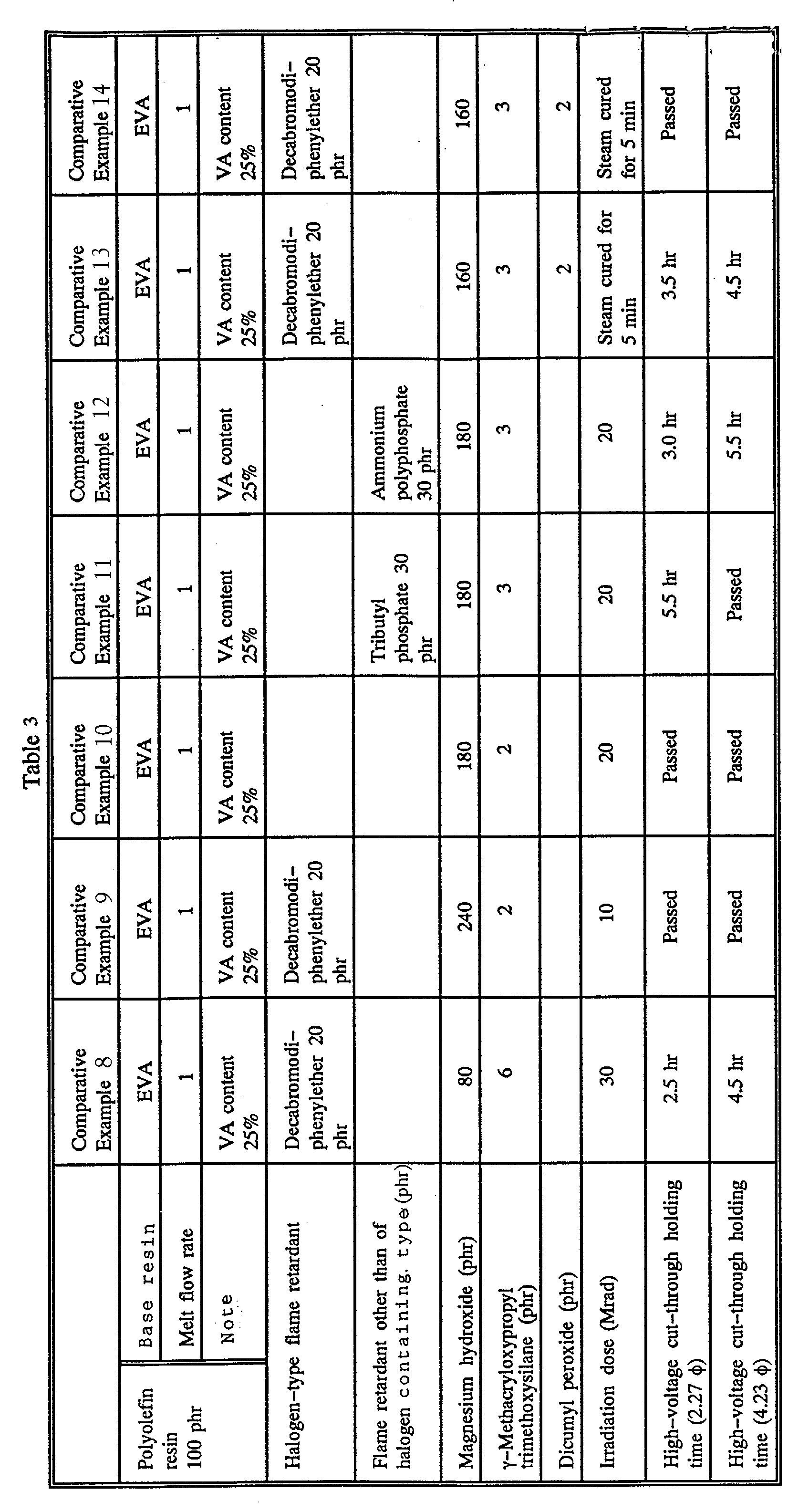

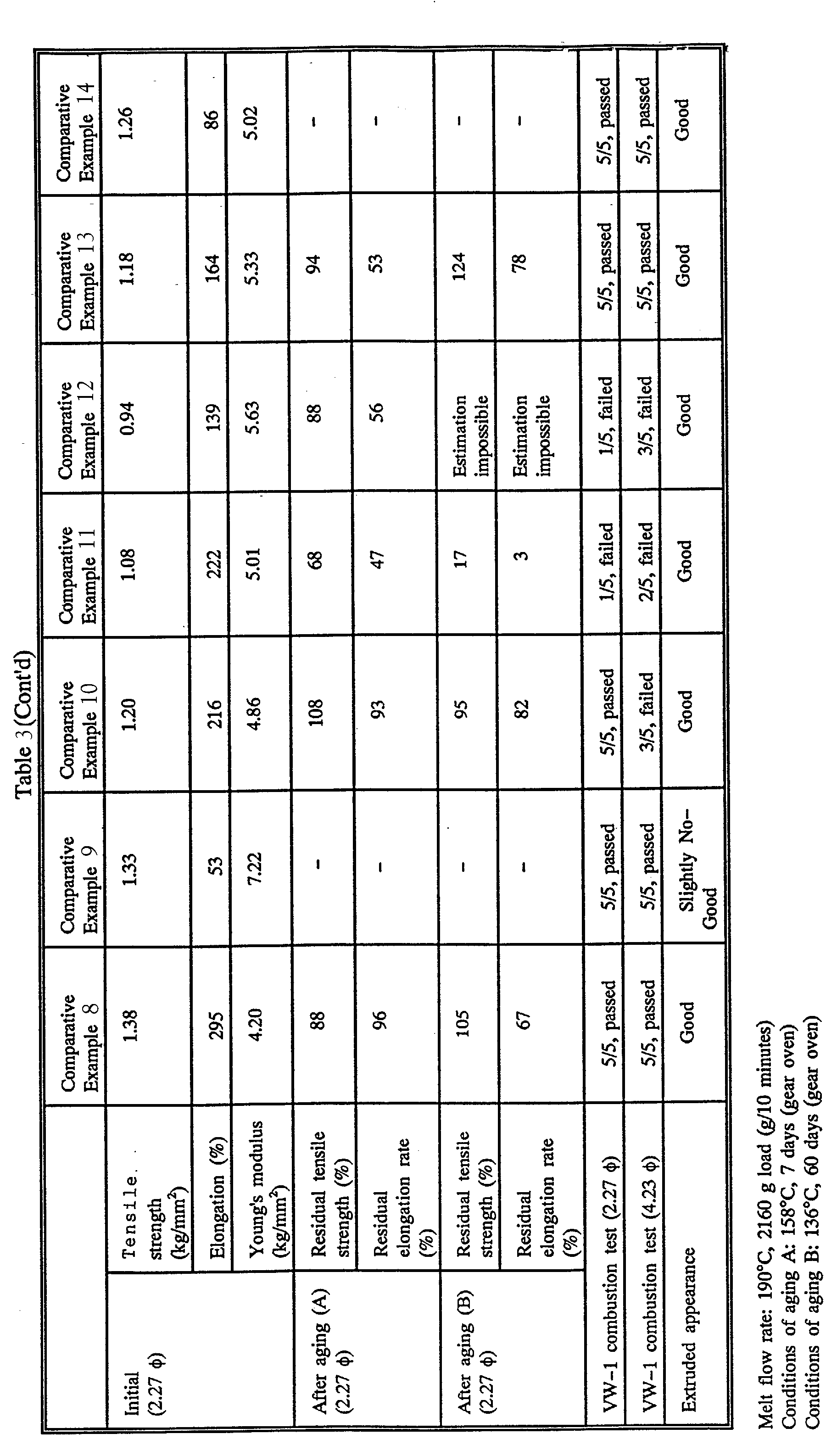

To the resin compositions described in Tables 1 to 3 were formulated, in addition to the shown ingredients, 10 parts by weight of antimony trioxide, 3 parts by weight of pentaerythrityltetrakis[3-(3,5-di-t-butyl-4-hydroxyphenyl) propionate], 1 part by weight of distearyl thiodipropionate and 0.5 part by weight of zinc stearate in common, against 100 parts by weight of the polyolefin resin.

The high-voltage cut-through test in Tables 1 to 3 was performed by charging a 0.45kg (1 pound) load at each of both ends of sample wire in a gear oven maintained at 125°C and the dielectric breakdown time was measured by applying 15kV of direct current to the samples of 2.27 mmφ and 60 kV to those of 4.23 mm φ at n = 3 respectively, and when 3 samples stood unbroken for longer than 8 hours the example was judged as passed.

In the heat aging test with the sample wires with 2.27 mm φ diameter, the retention of tensile strength and of elongation of the samples which had been submitted to aging by heating for 7 days at 158°C and those aged for 60 days at 136 °C were measured.

Here, retention (%) = (Value of heat-aged sample/ Initial value) x 100, and samples were judged as passed when they showed higher than 70% of the retention of tensile strength and higher than 65% of that of elongation. The combustion test was carried out following the VW-1 method at n = 5.

The characteristics of the resin coatings in the high-voltage cut-through test, heat aging test, combustion test and other tests in reference to their composition are as follows.

In Examples 1 through 7 such resin compositions as containing magnesium hydroxide with no surface treatment in the range of 100 to 200 parts by weight, halogen containing type flame retardant in the range of 5 to 50 parts by weight and an organic silane compound as represented by the general formula [1] in the range of 1 to 10 parts by weight, against 100 parts by weight of the olefin resin, were extruded over the conductor and cross-linked by electron bean irradiation. These samples passed the high-voltage cut-through test and both of the 2.27 mm φ and 4.23 mmφ samples passed the combustion test. They showed the initial tensile strength in the range of 1.1 to 1.3 kg/mm², satisfied the tensile strength higher than 1.06 kg/mm² required in the UL Standards and passed both heat aging tests at 158 °C for 7 days and at 136°C for 60 days. These samples showed about 3 to 6 kg/mm² of the Young's modulus in the insulating layer demonstrating that they were materials with excellent flexibility.

In Comparative Example 1 the sample contained 200 parts by weight of magnesium hydroxide without surface-treatment, 20 parts by weight of halogen containing type flame retardant and 5 parts by weight of an organic silane compound represented by the general formula [1] and was not irradiated by electron beam for cross linking. This sample failed to pass the high-voltage cut-through test and did not reach the level of 1.06 kg/mm² required in the UL Standards for the initial tensile strength.

In Comparative Example 2, a resin compound without being added with the the organic silane compound represented by the general formula [1] was used for insulating layer. The sample failed to pass the high-voltage cut-through test.

In Comparative Example 3, magnesium hydroxide of which surface had previously been treated with oleate was used. The sample passed the VW-1 test however, it showed the tensile strength lower than 1.06kg/mm² and did not passed the high-voltage cut-through test, heat-aging test.

The sample in Comparative Example 4 used magnesium hydroxide previously surface-treated with vinylsilane passed the VW-1 test however, it showed the tensile strength lower than 1.06kg/mm² and failed to pass the high-voltage cut-through test, heat-aging test.

In Comparative Example 5, magnesium hydroxide which had previously been surface-treated with γ-methacryloxypropyl-trimethoxysilane was used. The sample passed the combustion test but the initial tensile strength was lower than 1.06 kg/mm², and it failed to pass the high-voltage cut-through test and showed lower than 65% of the residual elongation percentage after the heat aging test.

In Comparative Example 6, vinyltriethoxysilane was employed in place of an organic silane compound represented by the general formula. The sample did not pass the high-voltage cut-through test and did not satisfy the required level of 1.06 kg/mm² of the initial tensile strength.

In Comparative Example 7, a polyfunctionalized monomer of trimethylolpropanetrimethacrylate, which had been widely used as a cross-linking accelerator for polyolefin and other thermoplastic resins, was added to accelerate the cross-linking efficiency by electron beam irradiation, but the sample failed to pass the high-voltage cut-through test and the 4.23 mm φ sample did not pass the combustion test.

The sample in Comparative Example 8 contained 80 parts by weight of magnesium hydroxide of which surface had not been treated failed to pass the high-voltage cut-through test.

The sample in Comparative Example 9 contained 240 parts by weight of magnesium hydroxide. It passed the high-voltage cut-through test however, it is questionable in practical use because it had slightly unsatisfactory appearance after extrusion and lower than 100% of initial elongation.

In Comparative Example 10 no halogen containing type flame retardant was added to the sample. It passed the high-voltage cut-through test but in the VW-1 test, the sample of 2.27 mm φ passed it while the one of 4.23 mm φ failed.

In the samples of Comparative Examples 11 and 12, halogen containing type flame retardant was not used but tributyl phosphate and ammonium polyphosphate, phosphorustype retardants, were used instead. In comparison with Comparative Example 10, the replacements were found to lower the flame resistance and also exert undesirable effects on the high-voltage cut-through characteristics.

In Comparative Examples 13 and 14, 2 parts by weight of dicumyl peroxide were added per 100 parts by weight of the polyolefin resin to make a thermally curable resin compositions and they were extruded over the conductor and heat-cured by compressed steam. The sample of Comparative Example 14 satisfied the high-voltage cut-through characteristics however, it showed undesirably lower than 100% of initial elongation, while the sample of Comparative Example 13 satisfied the initial elongation characteristics but failed to pass the high-voltage cut-through and heat aging resistance test, showing unbalance among characteristics.

Thus, a high-voltage lead wire for direct current which passes the required high-voltage cut-through property and flame resistance (VW-1), with temperature rating higher than 125°C grade and excellent flexibility can be obtained by making a resin composition by adding more than 100 parts by weight and less than 200 parts by weight of magnesium hydroxide with no surface treated, more than 5 parts by weight and less than 50 parts by weight of a halogen containing type flame retardant and more than 1 part by weight and less than 10 parts by weight of an organic silane compound which is represented by the general formula to 100 parts by weight of EVA, EEA or other polyolefin resin and mixing to make a resin composition, which is extruded over the conductor and is irradiated by electron beam, in other words, by using such a resin composition that is made, in the manufacturing process of the composition, by adding an organic silane compound represented by the general formula, during hot melt kneading of a mixture of polyolefin resin,magnesium hydroxide without surface treatment, halogen containing type flame retardant and other fillers and by irradiating by such an ionizing radiation as electron beam.

## Claims

1. A heat resistant, high voltage lead wire for direct current, comprising a conductor (1) and an insulating layer (2, 3) of a polyolefin-based resin composition, irradiated by ionising radiation, surrounding the conductor, wherein the resin composition contains 5 to 50 weight parts of a halogen-containing flame retardant per 100 weight parts of the resin and is made by adding more than 1 part by weight and less than 10 parts by weight of an organo-silane compound which is represented by the general formula described below, during the mixing of more than 100 parts by weight and less than 200 parts by weight of a metal hydroxide to 100 parts by weight of a polyolefin resin; 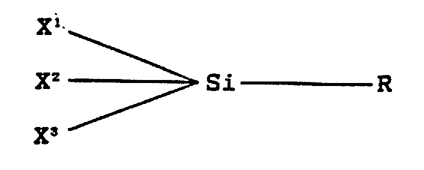 where R stands for an alkyl group containing an acrylic or methacrylic group, and X¹, X² and X³ represent the atomic groups selected from alkoxy, alkyl and halogen.

2. A lead wire according to claim 1 wherein the halogen-containing fire-retardant is selected from perchloropentacyclodecane, brominated diphenylether derivatives, brominated bisphenol derivatives, brominated epoxy-resin derivatives, brominated phthalimide and brominated phosphates.

## Patentansprüche

1. Wärmebeständiger Hochspannungs-Zuleitungsdraht für Gleichstrom, der einen Leiter (1) und eine den Leiter umgebende Isolierschicht (2, 3) aus einer Harzzusammensetzung auf Polyolefinbasis, die mit ionisierender Strahlung bestrahlt wurde, umfaßt, wobei die Harzzusammensetzung 5 bis 50 Gewichtsteile eines halogenhaltigen Flammverzögerungsmittels pro 100 Gewichtsteile Harz enthält und durch Zugabe von mehr als 1 Gewichtsteil und weniger als 10 Gewichtsteilen einer Organosilanverbindung, die durch die unten beschriebene allgemeine Formel dargestellt ist , während des Beimischens von mehr als 100 Gewichtsteilen und weniger als 200 Gewichtsteilen eines Metallhydroxids zu 100 Gewichtsteilen eines Polyolefinharzes hergestellt wird; 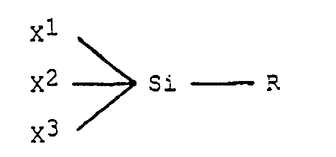 wobei R für eine Alkylgruppe steht, die eine Acryl- oder Methacrylgruppe enthält, und X¹, X² und X³ aus Alkoxy, Alkyl und Halogen ausgewählte Atomgruppen darstellen.

2. Zuleitungsdraht nach Anspruch 1, wobei das halogenhaltige Flammverzögerungsmittel aus Perchlorpentacyclodecan, bromierten Diphenyletherderivaten, bromierten Bisphenolderivaten, bromierten Epoxidharzderivaten, bromiertem Phthalimid und bromierten Phosphaten ausgewählt ist.

## Revendications

1. Câble haute tension résistant à la chaleur pour courant continu, comprenant un conducteur (1) et une couche isolante (2, 3) réalisée en une composition de résine à base de polyoléfine, irradiée par un rayonnement ionisant, entourant le conducteur, dans lequel la composition de résine contient 5 à 50 parties en poids d'un retardateur de combustion contenant un halogène pour 100 parties en poids de résine et est fabriquée en ajoutant plus de 1 partie en poids et moins de 10 parties en poids d'un composé organosilane qui est représenté par la formule générale donnée ci-dessous, pendant le mélange de plus de 100 parties en poids et moins de 200 parties en poids d'un hydroxyde de métal à 100 parties en poids d'une résine polyoléfinique ; 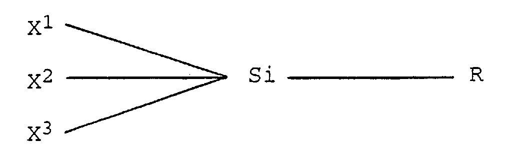 où R représente un groupe alkyle contenant un groupe acrylique ou méthacrylique, et X¹, X² et X³ représentent les groupes atomiques choisis parmi les alkoxy, alkyles et halogènes.

2. Câble selon la revendication 1, dans lequel le retardateur de combustion contenant un halogène est choisi parmi le perchloropentacyclodecane, les dérivés de diphenylether bromé, les dérivés de bisphénol bromé, les dérivés de résine epoxy bromé, le phthalimide bromé et les phosphates bromés.
